# NEW EUROPEAN PATENT SPECIFICATION

(11) **EP 0 398 752 B2**
(45) Date of publication and mention of the opposition decision: **15.10.1997**
(45) Mention of the grant of the patent: 27.07.1994
(21) Application number: 90305431.0
(22) Date of filing: 18.05.1990
(51) Int. Cl.: B01J 35/06, B01J 23/22, B01J 23/28, B01J 23/30, B01D 53/56

(54) **Catalyst for reducing nitrogen oxides**
Katalysator zur Reduktion von Stickoxyden
Catalysateur pour la réduction des oxydes d'azote

(30) Priority: 19.05.1989 JP 126456/89; 01.08.1989 JP 200070/89
(43) Date of publication of application: 22.11.1990
(73) Proprietor: BABCOCK-HITACHI KABUSHIKI KAISHA, Tokyo 100 (JP)
(72) Inventor: Yoshida, Naomi, Kure Research Labotatory, Kure-shi, Hiroshima-ken (JP); Yamasaki, Hitoshi, Kure Research Labotatory, Kure-shi, Hiroshima-ken (JP); Hamada, Ikuhisa, Kure Research Labotatory, Kure-shi, Hiroshima-ken (JP); Kato, Yasuyoshi, Kure Research Labotatory, Kure-shi, Hiroshima-ken (JP); Konishi, Kunihiko, Kure Research Labotatory, Kure-shi, Hiroshima-ken (JP); Matsuda, Toshiaki, Kure Research Labotatory, Kure-shi, Hiroshima-ken (JP); Fukuda, Yuji, Kure Research Labotatory, Kure-shi, Hiroshima-ken (JP)
(74) Representative: Pendlebury, Anthony

(56) References cited:
- EP-A- 0 336 882
- DE-A- 2 137 331
- DE-A- 3 433 197
- DE-B- 2 364 791
- FR-A- 2 435 967
- GB-A- 2 026 336
- US-A- 4 732 879

## Description

This invention relates to a catalyst for reducing nitrogen oxides in the exhaust gas with ammonium. More particularly it relates to a catalyst for removing nitrogen oxides which has a high strength, a suitable elasticity and a good durability to sulfur oxides in the exhaust gas.

As a catalyst for removing nitrogen oxides contained in exhaust gases, that obtained by molding a catalyst composition consisting of titanium oxide (TiO₂) and at least one of oxide(s) of molybdenum (Mo), tungsten (W), vanadium (V), etc. into a granular form, a plate form, an honeycomb form or the like has been used. Particularly in the case of a boiler exhaust gases generated by burning heavy oil, coal, etc. as fuel, it is necessary to treat a gas containing a large quantity of soots or ashes at a small pressure loss. Thus, catalysts having passages parallel to the gas flow direction, such as a combination of plateform catalysts, an honeycomb-form catalyst having a high percentage of opening, etc. have been used. As for concrete example of such catalysts, a catalyst obtained by coating a catalyst composition onto a metal substrate (Japanese patent publication No. Sho 61-28377), a catalyst obtained by extrusion-molding a catalyst composition into a honeycomb form (Japanese patent publication No. Sho 60-3856, etc.), a catalyst obtained by molding a ceramic fiber mat or paper into a honeycomb form, followed by coating a catalyst precursor onto the molded material (Japanese patent publication No. Sho 58-11253) etc. are proposed.

US-A-4520124 discloses a method for producing a catalyst for reducing nitrogen oxide. Inorganic fiber is beaten into a slurry and formed into a sheet. A porous catalytic structure is obtained having titanium dioxide and the catalytically active agent uniformly dispersed therein.

EP-A-0288746 is directed to a plate-shaped catalyst for the removal of nitrogen oxides from waste gases in the presence of ammonia, on the basis of a wire fabric and a catalytically active body applied thereto which contains a mixture of fibers heat-resistant between 400 and 650°C and beads heat-resistant between 400 and 650°C. The wire fabric is sand or corundum blasted and/or molten metal and/or metal oxide is sprayed on to the wire fabric.

EP-A-0336882 forms part of the state of the art by virtue of Art. 54(3) EPC. A catalyst filter is disclosed in which catalyst particles made of titanium oxide together with vanadium oxide and, if necessary, with tungsten oxide and whose diameters are between 0.01 and 1 µm are carried by a filter made by weaving monofilaments of a glass fiber whose diameters are between 3 and 15 µm giving the filter a density of 400 to 1000 g/m².

Among the above catalysts, the product having a catalyst coated on a metal substrate is superior in that since a flat plate part occupies most of the product, the pressure loss is so small that ashes are hardly accumulated, but there have been drawbacks that it is heavy and the metal substrate thereof is liable to be oxidized.

Further, as to the product obtained by molding the catalyst compounds into a honeycomb form according to an extrusion molding process, its dimension is restricted to less than about 150 mm square due to the limitation of the strength of material and the molding technique. Hence, it has been necessary to stack a large number of the molded products in a large capacity apparatus having a several hundreds m³ with a laborious work. Further, there has been a drawback that the molded product is low in its impact strength.

Further, the product obtained by coating a catalyst composition onto the surface of inorganic fiber sheet or paper is high in its impact strength, whereas there has been a drawback that its mechanical strength is so low that it is abraded by ash particles contained in exhaust gases. Further, in the case of exhaust gases containing acidic gases, it is sometimes corroded to reduce its strength.

The present invention aims to provide a catalyst having overcome the problems of the prior art and having a high strength together with a light weight, suitable to a large capacity denitration apparatus, and resistant to exhaust gases containing acidic gases.

According to the present invention, there is provided a catalyst according to claim 1.

The invention will now be further described by way of example only with reference to the drawings in which:
Fig. 1 shows a view illustrating the catalyst constitution of the present invention.
Figs. 2 and 3 each show a chart comparing the concentration distributions of Aℓ and Ca (Aℓ₂O₃ and CaO) in the crosssection of the glass fibers used in Examples and Comparative Example.

In the case where the exhaust gas includes acidic gases such as sulfur oxides, the inorganic fiber cloth is treated with a mineral acid like hydrochloric acid, sulfuric acid or nitric acid to form a surface layer deficient in alumina and alkaline earth metal (i.e. calcium) oxide. This treatment may be carried before or after the impregnation of the inorganic oxides, the latter being preferable.

The present inventors have made research on the cause of strength reduction of a catalyst for purifying exhaust gases using a general-purpose glass fiber cloth due to SOx in the exhaust gases, and have found that in the case where an alumina and an alkaline earth metal and oxide are contained in the cloth, they react with acidic gases in exhaust gases, resulting in strength reduction, and that the main cause thereof consists in that CaO and Aℓ₂O₃ in the glass fibers react with SO₃ to form CaSO₄ and Aℓ₂(SO₄)₃, which have the fibers sticked to one another to inhibit movement of the fibers to break the fibers easily by elongation, bending or heating. According to the present invention, by immersing the glass fiber cloth in a mineral acid like hydrochloric acid, nitric acid or surfuric acid to form a layer deficient in aluminum and calcium on the surface thereof, followed by applying catalyst compounds thereto, it is possible to prevent the fibers from sticking with one another due to the formation of Ca- or Aℓ-compounds and to obtain a catalyst retaining a high strength for a long time in the exhaust gases containing acidic gases.

If CaO and Aℓ₂O₃ are removed by acid-immersion as far as those in the central part of the fibers, the strength is adversely reduced to make it impossible to endure the practical use. So it is important to remove CaO and Aℓ₂O₃ only from the surface layer of the fiber or cloth.

In the present invention, the glass fiber cloth, as it is, or after impregnated or coated with a slurry containing an inorganic oxide like silica or titania and an organic binder, is immersed in an aqueous solution of 3 to 10% by weight of an acid such as hydrochloric acid, nitric acid, sulfuric acid and treated on heating to about 50° to 100°C for 3 hours to dissolve a portion of CaO and Aℓ₂O₃ out of the fiber cloth. The resulting cloth is then washed with water, dried and used as the catalyst substrate.

By the above treatment, the cloth is given a stiffness, the operations at the acid treatment and water-washing become easy and it is also possible to prevent the cloth from shifting at the time of molding.

Onto the thus obtained cloth is applied a paste prepared in advance by adding water to known catalyst powder of titanium oxide, molybdenum oxide, vanadium oxide, tungsten oxide, etc. by a press means such as a calendar roll so as to fill the interstices of the cloth and coat thereon. The resulting plate-form catalyst is dried as it is, or molded while dried by means of a heated mold, and processed into a catalyst having an optional shape. This catalyst is further calcined at 400° to 600°C in accordance with the catalyst component. In the above manner, the catalyst of the present invention is obtained, and in the production of the catalyst, by mixing inorganic fibers into the catalyst paste, the resulting catalyst can be improved in mechanical property.

The inorganic fiber cloth used in the present invention can be obtained by bundling inorganic filaments of 3 to 20 µm in diameter with a bundling agent such as starch, plastic emulsion, etc. into 200 to 800 ends, followed by twisting these ends into about 5 to 10 ends and weaving these in the longitudinal and lateral directions. Thus, a cloth consisting of yarns obtained by twisting a large number of inorganic filaments has a very high strength and also a superior heat resistance due to the inorganic material.

As the inorganic fiber cloth, a glass fiber cloth is preferably used. A glass fiber cloth composed of the so-called non-alkali glass (such as E glass, T glass, etc.)-made fiber-twisted yarns are most preferably used. The fiber diameter, the weaving manner, etc. have no particular limitation, but for example, a product obtained by twisting 1,000 to 2,000 ends of E glass-made filaments of several µm in diameter into one yarn, followed by plain-weaving a number of such yarns, affords good results.

In the present invention, the catalyst composition preferably comprises titanium oxide and at least one compound select from those of vanadium, molybdenum and tungsten.

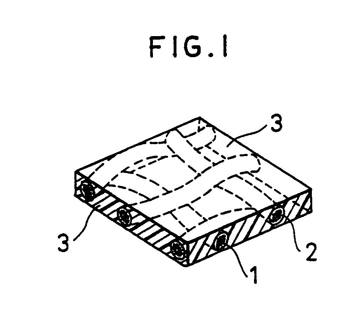

Fig. 1 shows the schematic view of the catalyst according to the present invention. As seen from Fig. 1, catalyst composition 3 fills the interstices of a glass fiber cloth consisting of twisted yarns 1 having a layer 2 deficient in alumina and alkaline earth metal oxide to impart stiffness to the whole of the catalyst, and also the glass fibers 14 having a resistance to acidic gases and a superior tensile strength penetrate through the inside of the catalyst body to realize a very high strength and durability as a whole.

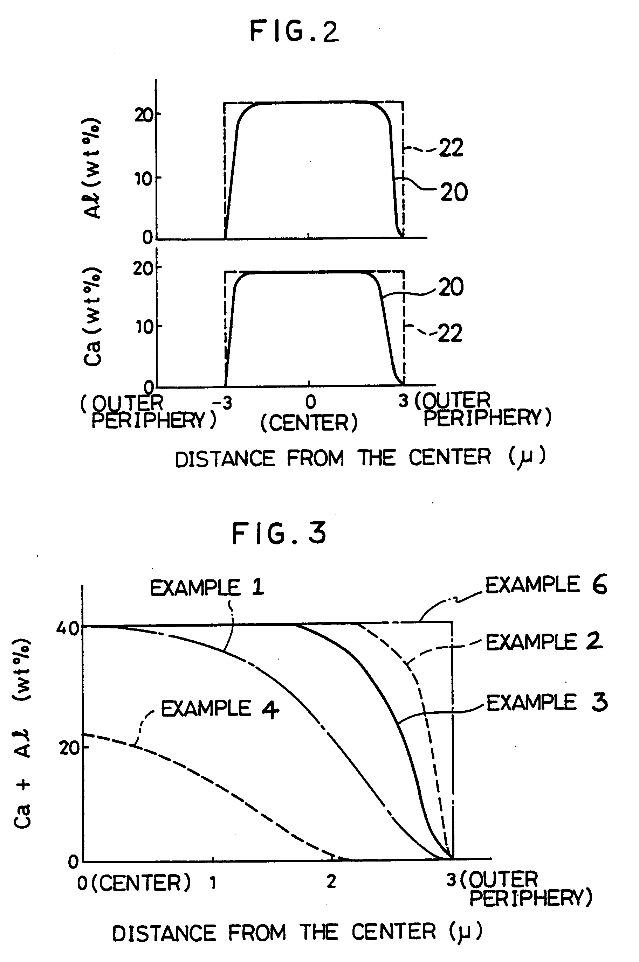

Fig. 2 shows distributions of concentration of Ca and Aℓ in the cross-section of the fiber after acid treatment (20) and of a no treatment (22). As shown in Fig. 2, a surface layer where Ca and Aℓ are almost absent is formed in the case of the fiber after acid-treatment. Thus, even when the catalyst is used for purifying exhaust gases containing acidic gases such as SOx, etc., strength-reducing compounds such as CaCO₄, Aℓ₂(SO₄)₃, etc. are not formed, to retain a high strength of the fibers for a long period.

### DETAILED DESCRIPTION OF THE PREFERRED EMBODIMENT

The present invention will be described more in detail by way of Examples.

### Example 1 (Comparative)

An E glass-made cloth of 0.5 m × 10 m obtained by plain-weaving twisted yarns, consisting of 2,000 ends of filaments of 6 µm in fiber diameter was immersed in a slurry consisting of SiO₂ (10 wt.%), TiO₂ (50 wt.%), PVA (polyvinyl alcohol) (1 wt.%) and water (the balance), followed by squeezing by means of sponge rolls and then drying at 150°C for 30 minutes to form a layer consisting of TiO₂ and SiO₂ on the fiber surface. The resulting substrate was immersed in 5% hydrochloric acid (70 kg) heated to 60°C, followed by treating the resulting substrate for 2 hours while agitating at an interval of 10 minutes, placing the substrate in a flowing water to wash for 30 minutes and drying at 150°C. Separately, a catalyst powder (Ti/Mo/V = 83/5/2 (ratio by atom)), 200 meshes: 90% or less) (20 kg) consisting of TiO₂, MoO₃ and V₂O₅, ceramic fibers (SiO₂/Aℓ₂O₃≒1) (4 kg) and water (9 kg) were kneaded by means of a kneader to prepare a catalyst paste. This paste was contact-bonded onto the above substrate by means of press rolls so as to fill the interstices thereof with the paste, followed by drying the resulting catalyst sheet of about 1 mm thick at 150°C and then calcining in air at 550°C for 2 hours.

### Examples 2-4 (Example 4 being Comparative)

Example 1 was repeated except that the concentration of hydrochloric acid was varied to 1, 3 and 10 wt.%, to prepare catalysts.

### Example 5

Example 1 was repeated except that the hydrochloric acid treatment of Example 1 was carried out before coating with the slurry of SiO₂, TiO₂ and PVA, to prepare a catalyst.

### Example 6 (comparative)

A catalyst was prepared in the same manner as Example 1 without carrying out the hydrochloric acid treatment.

### Example 7 (comparative)

A catalyst was prepared in the same manner as Example 1 except that the slurry of SiO₂, TiO₂ and PVA was replaced by silica sol and no hydrochloric acid treatment was carried out, to prepare a catalyst. This example was carried out in order to observe the effect in the case where a silica layer was only formed without acid treatment of the glass fiber cloth.

In order to observe the effectiveness of the present invention, the initial strength of the catalyst, the average quantities of Ca and A in the substrate and their distribution and change of strength in a SO₃-containing gas with lapse of time were measured with the catalysts of Examples 1 to 7 as follows:
Strength: Tensile break strength (Size of test piece: 20 mm × 50 mm)
Contents of Aℓ and Ca in a substrate: After grinding the substrate, the contents were sought according to a fluorescent X-ray analysis.
Distribution of Aℓ and Ca: Distribution in the crosssectional direction of single fiber was determined by X-ray micro-analyzer.
SOx-resistant test: Atmosphere of SO₂ (500 ppm) + SO₃ (500 ppm), 400°C × 300 hrs.

The result are collectively shown in Table 1 and Fig. 3. Table 1 shows the composition of the substrates and the tensile strengths of the catalysts.

**Table 1**

| Catalyst | Compounds in fibers (wt.%) | | Tensile strength of catalyst (kg/cm) | |
|---|---|---|---|---|
| | CaO | Aℓ₂O₃ | Initial | After SOx-resistant test |
| Example 1 | 10.5 | 11.6 | 190 | 191 |
| Example 2 | 15.5 | 17.9 | 211 | 203 |
| Example 3 | 12.6 | 14.7 | 187 | 167 |
| Example 4 | 1.3 | 1.4 | 124 | 128 |
| Example 5 | 8.2 | 11.0 | 165 | 171 |
| Example 6 | 18.5 | 22.0 | 185 | 65 |
| Example 7 | 17.5 | 20.7 | 94 | 45 |

According to the catalysts of Example 1 to 5 , a high strength was obtained both at the initial period and after SOx-resistant test. Whereas, according to the catalysts of Examples 6 and 7 without acid-treatment, a reduction in strength was observed in SOx-resistant test. As described above, the acid treatment of the second aspect of the present invention is notably effective for improving SOx-resistance.

Further, in the case of the catalyst of Example 7 ,the strength is rather low from the initial period and strength reduction due to SOx is also notable. Thus, it is considered that a mere formation of silica coating on the outside cannot prevent strength reduction due to SOx, but the acid treatment according to the present invention is effective for improving durability.

Fig. 3 shows the distribution of CaO and Aℓ₂O₃ (the total quantity of Ca and Aℓ) in the fiber crosssection of Examples 1-5 . It is seen that even the catalyst of Example 2 having the quantities of Ca and Aℓ slightly reduced (see Table 1 ) has nearly 0% of the concentration of Ca and Aℓ on the surface layer of the fiber. Thus, it is considered that the strength reduction due to SOx is prevented by the formation of this surface layer.

As described above, according to the present invention, by forming a layer deficient in oxides such as CaO, Aℓ₂O₃, reactive with SOx on the inorganic fiber surface, it is possible to prevent the strength reduction of the catalyst due to SOx. As a result, it has become possible to use general-purpose glass fibers such as E glass as a substrate of the catalyst for purifying exhaust gases containing SOx, such as a denitration catalyst for boiler exhaust gases.

## Claims

1. A catalyst for reducing nitrogen oxides in an exhaust gas with ammonia, wherein said exhaust gas includes acidic gases, the catalyst having a catalyst composition coated on an inorganic fiber cloth, said inorganic fiber cloth comprises fibers containing silica, alumina and alkaline earth metal oxide, said inorganic fibers have a surface layer deficient in alumina and alkaline earth metal oxide, which surface layer is formed by immersing said inorganic fiber cloth in a mineral acid selected from hydrochloric acid, sulfuric acid and nitric acid to dissolve alumina and alkaline earth metal oxide from only the surface layer of the inorganic fibers.

2. A catalyst for reducing nitrogen oxides according to claim 1, wherein said catalyst composition comprises titanium oxide and at least one compound selected from those of vanadium, molybdenum and tungsten.

3. A catalyst for reducing nitrogen oxides according to claim 1 or 2, wherein said inorganic fiber cloth is a glass fiber cloth containing silica, alumina and alkaline earth metal oxide.

4. A catalyst for reducing nitrogen oxides according to any one of the preceding claims, wherein said inorganic fiber cloth is impregnated with a mixture of at least one inorganic oxide selected from silica and said catalyst composition and an organic binder.

5. Use of a catalyst in accordance with any one of claims 1 to 4 in the reduction with ammonia of nitrogen oxides in an exhaust gas including acidic gases.

6. A process for producing a catalyst for reducing nitrogen oxides in an exhaust gas containing acidic gases with ammonia, said catalyst having a catalyst composition coated on an inorganic fiber cloth, said inorganic fiber cloth comprising fibers containing silica, alumina, and alkaline earth metal oxide, said process comprising the steps of:
impregnating an inorganic fiber cloth with a slurry containing a mixture of an organic binder and at least one inorganic oxide selected from silica and said catalyst composition to obtain a resulting impregnated inorganic fiber cloth;
immersing the resulting inorganic fiber cloth in an aqueous solution of 3 to 10% by weight of a mineral acid to dissolve alkaline earth metal oxide and alumina from only a surface layer of the resulting inorganic fiber cloth, followed by washing and drying to obtain a substrate; and
applying the catalyst composition to said substrate, followed by drying and calcining to obtain said catalyst.

7. A process for producing a catalyst for reducing nitrogen oxides in an exhaust gas containing acidic gases with ammonia, said catalyst having a catalyst composition coated on an inorganic fiber cloth, said inorganic fiber cloth comprising fibers containing silica, alumina, and alkaline earth metal oxide, said process comprising the steps of:
immersing the inorganic fiber cloth in an aqueous solution of 3 to 10% by weight of a mineral acid to dissolve alkaline earth metal oxide and alumina out of only a surface layer of the inorganic fiber cloth, followed by washing and drying to obtain a resulting inorganic fiber cloth;
coating said resulting inorganic fiber cloth with a slurry containing an organic binder and at least one inorganic oxide selected from silica and said catalyst composition; and
applying the catalyst composition to the coated fiber cloth, followed by drying and calcining to obtain a catalyst.

## Patentansprüche

1. Katalysator zum Reduzieren von in einem Abgas enthaltenen Stickoxiden mit Ammoniak, wobei das Abgas saure Gase enthält, der Katalysator eine Katalysatorzusammensetzung aufweist, die auf ein anorganisches Fasergewebe aufgeschichtet ist, das anorganische Fasergewebe aus Fasern besteht, die Siliziumdioxid, Aluminiumoxid und Erdalkalimetalloxid enthalten, die anorganischen Fasern eine Oberflächenschicht aufweisen, die frei ist von Aluminiumoxid und Erdalkalimetalloxid, und wobei die Oberflächenschicht durch Eintauchen des anorganischen Fasergewebes in eine Mineralsäure gebildet ist, die aus Salzsäure, Schwefelsäure und Salpetersäure ausgewählt ist, um Aluminiumoxid und Erdalkalimetalloxid nur von der Oberflächenschicht der anorganischen Fasern zu lösen.

2. Katalysator zum Reduzieren von Stickstoffoxiden gemäß Anspruch 1, bei dem die Katalysatorzusammensetzung Titanoxid und wenigstens eine Verbindung enthält, die aus den Verbindungen von Vanadium, Molybdän und Wolfram ausgewählt ist.

3. Katalysator zum Reduzieren von Stickstoffoxiden nach Anspruch 1 oder 2, bei dem das anorganische Fasergewebe ein Glasfasergewebe ist, das Siliziumdioxid, Aluminiumoxid und Erdalkalimetalloxid enthält.

4. Katalysator zum Reduzieren von Stickstoffoxiden nach einem der vorangehenden Ansprüche, bei dem das anorganische Fasergewebe mit einer Mischung von wenigstens einem anorganischen Oxid, das aus Siliziumdioxid und der Katalysatorzusammensetzung ausgewählt ist, und einem organischen Rindemittel imprägniert ist.

5. Verwendung eines Katalysators nach einem der Ansprüche 1 bis 4 zum Reduzieren mit Ammoniak von Stickoxiden, die in einem saure Gase enthaltenden Abgas enthalten sind.

6. Verfahren zur Herstellung eines Katalysators zum Reduzieren von Stickstoffoxiden, die in einem saure Gase enthaltenden Abgas enthalten sind, mit Ammoniak, wobei der Katalysator eine Katalysatorzusammensetzung aufweist, die auf ein anorganisches Fasergewebe aufgeschichtet ist, wobei das anorganische Fasergewebe aus Fasern besteht, die Siliziumdioxid, Aluminiumoxid und Erdalkalimetalloxid enthalten, wobei das Verfahren die folgenden Schritte umfaßt:
Imprägnieren eines anorganischen Fasergewebes mit einer Aufschlämmung, die eine Mischung aus einem organischen Bindemittel und wenistens einem anorganischen Oxid enthält, das aus Siliziumdioxid und der Katalysatorzusammensetzung ausgewählt ist, um ein sich ergebendes anorganisches Fasergewebe zu erhalten;
Eintauchen des erhaltenen anorganischen Fasergewebes in eine wäßrige Lösung von 3 bis 10 Gew.-% einer Mineralsäure, um Erdalkalimetalloxid und Aluminiumoxid lediglich aus einer Oberflächenschicht des erhaltenen anorganischen Fasergewebes herauszulösen, gefolgt von Waschen und Trocknen, um einen Träger zu erhalten; und
Aufbringen der Katalysatorzusammensetzung auf den Träger, gefolgt von Trocknen und Kalzinieren, um den Katalysator zu erhalten.

7. Verfahren zur Herstellung eines Katalysators zum Reduzieren von Stickstoffoxiden, die in einem saure Gase enthaltenden Abgas enthalten sind, mit Ammoniak, wobei der Katalysator eine Katalysatorzusammensetzung aufweist, die auf ein anorganisches Fasergewebe aufgeschichtet ist, das anorganische Fasergewebe aus Fasern besteht, die Siliziumdioxid, Aluminiumoxid und Erdalkalimetalloxid enthalten, und wobei das Verfahren die folgenden Schritte umfaßt:
Eintauchen des anorganischen Fasergewebes in eine wäßrige Lösung von 3 bis 10 Gew.-% einer Mineralsäure, um Erdalkalimetalloxid und Aluminiumoxid lediglich aus einer Oberflächenschicht des anorganischen Fasergewebes herauszulösen, gefolgt von Waschen und Trocknen, um das sich ergebende anorganische Fasergewebe zu erhalten;
Beschichten des erhaltenen anorganischen Fasergewebes mit einer Aufschlämmung, die ein organisches Bindemittel und wenigstens ein anorganisches Oxid enthält, das aus Siliziumdioxid und der Katalysatorzusammensetzung ausgewählt ist; und
Aufbringen der Katalysatorzusammensetzung auf das beschichtete Fasergewebe, gefolgt von Trocknen und Kalzinieren, um einen Katalysator zu erhalten.

## Revendications

1. Catalyseur pour réduire les oxydes d'azote d'un gaz d'échappement utilisant l'ammoniac, dans lequel ledit gaz d'échappement comprend des gaz acides, le catalyseur ayant une composition de catalyseur enduite sur une toile de fibres inorganiques, ladite toile de fibres inorganiques comporte des fibres contenant de l'oxyde de silicium, de l'oxyde d'aluminium et de l'oxyde de métaux alcalino-terreux, et lesdites fibres inorganiques possèdent une couche superficielle insuffisante en oxyde d'aluminium et oxyde de métaux alcalinoterreux, laquelle couche superficielle est formée par immersion de ladite toile de fibres inorganiques dans un acide minéral choisi parmi l'acide chlorhydrique, l'acide sulfurique et l'acide nitrique pour dissoudre l'oxyde d'aluminium et l'oxyde de métaux alcalino-terreux sur seulement une couche superficielle des fibres inorganiques.

2. Catalyseur pour réduire les oxydes d'azote selon la revendication 1, où ladite composition du catalyseur comporte de l'oxyde de titane et au moins un composé choisi parmi ceux de vanadium, molybdène et tungstène.

3. Catalyseur pour réduire les oxydes d'azote selon la revendication 1 ou 2, où ladite toile de fibres inorganiques est une toile-verre contenant de l'oxyde de silicium, de l'oxyde d'aluminium et de l'oxyde de métaux alcalino-terreux.

4. Catalyseur pour réduire les oxydes d'azote selon n'importe laquelle des revendications précédentes, où ladite toile de fibres inorganiques est imprégnée d'un mélange d'au moins un oxyde inorganique choisi parmi l'oxyde de silicium et ladite composition du catalyseur et d'un liant organique.

5. Utilisation d'un catalyseur, conformément à n'importe laquelle des revendications 1 à 4, dans la réduction avec l'ammoniac des oxydes d'azote dans un gaz d'échappement comportant des gaz acides.

6. Procédé pour produire un catalyseur pour réduire les oxydes d'azote d'un gaz d'échappement contenant des gaz acides utilisant l'ammoniac, ledit catalyseur ayant une composition de catalyseur enduite sur une toile de libres inorganiques, ladite toile de fibres inorganiques comportant des fibres contenant de l'oxyde de silicium, de l'oxyde d'aluminium et de l'oxyde de métaux alcalino-terreux, ledit procédé comportant les étapes :
d'imprégnation d'une toile de fibres inorganiques d'une suspension épaisse contenant un mélange d'un liant organique et d'au moins un oxyde inorganique choisi parmi l'oxyde de silicium et ladite composition du catalyseur pour obtenir une toile de fibres inorganique résultante ;
d'immersion de la toile de fibres inorganiques résultante dans une solution aqueuse de 3 à 10% en poids d'un acide minéral pour dissoudre l'oxyde de métaux alcalino-terreux et l'oxyde d'aluminium sur seulement une couche superficielle de la toile de fibres inorganiques résultante, suivi du lavage et du séchage pour obtenir un substrat et,
d'application de la composition du catalyseur sur ledit substrat suivi du séchage et de la calcination pour obtenir ledit catalyseur.

7. Procédé pour produire un catalyseur pour réduire les oxydes d'azote d'un gaz d'échappement contenant des gaz acides utilisant l'ammoniac, ledit catalyseur ayant une composition de catalyseur enduite sur une toile de fibre inorganiques, ladite toile de fibres inorganiques comportant des fibres contenant de l'oxyde de silicium, de l'oxyde d'aluminium et de l'oxyde de métaux alcalino-terreux, ledit procédé comportant les étapes :
d'immersion de la toile de fibres inorganiques dans une solution aqueuse de 3 à 10% en poids d'un acide minéral pour dissoudre l'oxyde de métaux alcalino-terreux et l'oxyde d'aluminium sur seulement une couche superficielle de la toile de fibres inorganiques, suivi du lavage et du séchage pour obtenir une toile de fibres inorganiques résultante ;
de revêtement de ladite toile de fibres inorganiques résultante avec une suspension épaisse contenant un liant organique et au moins un oxyde inorganique choisi parmi l'oxyde de silicium et ladite composition du catalyseur : et,
d'application de la composition du catalyseur sur la toile de fibres enduite, suivi du séchage et de la calcination pour obtenir un catalyseur.
